# EUROPEAN PATENT SPECIFICATION

(11) **EP 3 885 394 B1**
(45) Date of publication and mention of the grant of the patent: **07.10.2026**
(21) Application number: 21171326.8
(22) Date of filing: 24.11.2015
(51) Int. Cl.: C08G 73/00, C08L 101/00, A01N 33/12, A01N 25/10, A01N 31/02, A01N 25/24

(54) **SURFACE DISINFECTANT WITH RESIDUAL BIOCIDAL PROPERTY**
OBERFLÄCHENDESINFEKTIONSMITTEL MIT VERBLEIBENDEN BIOZIDEN EIGENSCHAFTEN
DÉSINFECTANT DE SURFACE AYANT UNE PROPRIÉTÉ BIOCIDE RÉSIDUELLE

(30) Priority: 26.11.2014 US 201462084917 P; 02.03.2015 US 201562127075 P; 26.05.2015 US 201562166403 P; 23.11.2015 US 201514948962
(43) Date of publication of application: 29.09.2021
(62) Document number(s) of the earlier application(s) in accordance with Art. 76 EPC: 15864079.7 / 3 224 300
(73) Proprietor: Microban Products Company, Huntersville, North Carolina 28078 (US)
(72) Inventor: Lan, Tian, Huntersville, 28078 (US); Hanna, Samuel James, Charlotte, 28210 (US); Sloan, Gina Parise, Statesville, 28625 (US); Aylward, Brian Patrick, Concord, 28027 (US); Welch, Karen Terry, Kannapolis, 28081 (US); Shireman, Dennis Earl, Marion, 72364 (US); Kavchok, Kevin Andrew, Charlotte, 28269 (US); Hawes, Charles L, Cordova, 38016 (US)
(74) Representative: Boult Wade Tennant LLP

(56) References cited:
- CN-A- 102 965 214
- JP-B2- H0 776 113
- US-A- 4 481 167
- US-A- 4 990 339
- US-A- 5 654 154
- US-A- 5 932 253
- US-A1- 2009 087 393
- US-A1- 2012 045 583
- US-A1- 2012 183 606
- US-B1- 6 194 075
- US-B1- 6 458 906
- WASCHINSKI C J ET AL: "Poly(oxazoline)s with Telechelic Antimicrobial Functions", BIOMACROMOLECULES, AMERICAN CHEMICAL SOCIETY, vol. 6, 1 January 2005 (2005-01-01), pages 235 - 243, XP002405168, ISSN: 1525-7797, DOI: 10.1021/BM049553I

## Description

### FIELD OF THE INVENTION

The present invention relates to the field of disinfectant formulations, and more specifically, to a disinfectant formulation imparting a residual biocidal property.

### BACKGROUND OF THE INVENTION

Microbes exist everywhere in the modern world. While some are beneficial to humans and the environment, others may have significant negative consequences for contaminated articles as well as the persons, animals and ecological members coming in contact with them. There are a number of industries and environments where such microbes are especially prevalent.

### Healthcare

A hospital-acquired infection (HAI; alternatively a "nosocomial infection") is an infection whose development is favored by a hospital or healthcare environment. Such maladies typically are fungal or bacterial infections and can afflict the victim locally or systemically. Nosocomial infections can cause severe pneumonia as well as infections of the urinary tract, bloodstream, and other parts of the body.

Nosocomial infections have severe medical implications for patients and care providers. In the United States, data suggest that approximately 1.7 million instances of hospital-associated infections occur each year, with nearly 100,000 deaths resulting therefrom. European data and surveys indicate Gram-negative bacterial infections alone account for 8,000-10,000 deaths each year.

Several aggravating factors contribute to the high HAI rate. Hospitals, urgent care centers, nursing homes, and similar facilities focus their treatments on those with serious illnesses and injuries. As a result, these facilities house abnormally highly concentrated populations of patients with weakened immune systems.

A trio of pathogens is commonly found in healthcare settings and together account for approximately one-third of nosocomial infections: coagulase-negative *Staphylococci (15%), Candida* species (11%), and *Escherichia coli (10%).*

Worse, it is the more robust disease-causing pathogens that are present in such environments. The six so-called "ESKAPE pathogens" *- Enterococcus faecium, Staphylococcus aureus, Klebsiella pneumoniae, Acinetobacter baumannii, Pseudomonas aeruginosa,* and *Enterobacter* species - possess antibiotic resistance and are implicated in nearly half of all nosocomial infections. Their resistance to one or more biocidal agents makes such infections particularly dangerous.

In particular, the broad nutritional versatility of *Pseudomonas* permits its survival in extreme environments, including survival on surfaces not intensively cleaned and sterilized. This pathogen's ubiquity in the hospital environment makes it a leading cause of Gram-negative nosocomial infections. Particularly vulnerable are immune-compromised patients (e.g. those afflicted with cystic fibrosis, cancer, or burns).

The most common means of HAIs is through direct or indirect contact transmission. Direct contact transmission involves a patient contacting either a contaminated patient or worker. As care providers move through the healthcare institution, they come into contact with its many patients. These workers unwittingly act in a manner analogous to bees in a garden, "pollinating" rooms and wards as they care for residents.

Indirect contact transmission occurs when the patient contacts a contaminated object or surface. The healthcare environment presents an array of articles capable of passively vectoring pathogens.

Nosocomial infections further deal a serious blow to the volume, quality, and cost of healthcare provided by hospitals and other institutions. In addition to the roughly 100,000 HAI-related deaths occurring annually in the United States, an estimated two million more victims are forced to endure the physical ravages and emotional distress associated with these serious and avoidable illnesses.

Institutions have reacted by creating policies to impose more stringent cleanliness and disinfection requirements upon staff and the patient environment. These programs typically include frequent hand-washing and frequent disinfection of surfaces. Despite implementation of programs to curb nosocomial infections, infections still occur at unacceptably high rates.

### Home care and Household

Household environments also face microbes. A main disadvantage associated with consumer disinfectants and sanitizers is that, while they can be effective at initially killing microbes, the surface is easily and quickly re-contaminated through contact, airborne microbes, and un-killed residual microbes before treatment. While some of the disinfectants would continue to offer some control if simply left on the surface, this would result in a greasy or tacky residue that would be easily negated by casual contact with the surface. Thus, there is a desire for a home care and household cleaner that kills microbes quickly on contact, then acts as a residual disinfectant but yet does not have this undesirable sticky or tacky effect. Such cleaners may be useful for general purpose household cleaning, bathroom cleaning, and spray protectants.

A difference between hospital and healthcare cleaners and household products is the allowable VOC (volatile organic content). The regulations for most non-aerosol household consumer disinfectants are a maximum of 1% VOC.

### Food Service

The food service industry also faces outbreaks in contamination of pathogens in the workplace and spreading disease out to consumers. Even though food manufacturers adopt vigorous hygiene plans and comply with tight government hygiene regulations, major outbreaks of microbes are still reported occasionally that causes serious illness among consumers. Disinfectants with residual activities should effectively alleviate the issue.

US 4481167 relates to complexes comprising (a) a poly-2-oxazoline or poly-2-oxazine, such as the homopolymers of polymerized 2-ethyl-2-oxazoline or 2-ethyl-2-oxazine, and (b) IBrCl- or polyhalide anion of the formula (XY₂ₙ)-where X and Y are individually chloride, bromide or iodide, but not both chloride, and n is 1, 2 or 3, and an independently supplied cation selected from the group consisting of alkali metals, alkaline earth metals, hydrogen and mixtures thereof. These complexes are readily prepared in either an aqueous or anhydrous environment at room temperature and are more stable than either complexes of polyoxazolines or polyoxazines and halogen or interhalogen; or complexes of polyvinylpyrrolidone and polyhalide anions. US 2009/087393 relates to a formable dental treatment tray utilizing poly(2-ethyl-2-oxazoline) and a gelatinous active. Blending of the active is accomplished by mixing the Poly(2-ethyl-2-oxazoline) with an active ingredient, such as a peroxide like hydrogen peroxide, carbamide peroxide, sodium perborate, or sodium percarbonate, usually also with water or an appropriate organic solvent. Peroxide concentrations in these new gels can reach a 30% concentration of hydrogen peroxide while maintaining a shelf life of six months at room temperature without developing peroxide decomposition. The gels are applied to an appropriate backing and dried to a gelatinous state. In use, the active is hydrated and regains adhesiveness. Then the tray is pressed and formed around a user's dental arch to form the customizable tray. Multiple active ingredients may be used, with or without peroxide, for accomplishing desired treatment regimens. US 4990339 relates to a water soluble dermal treatment film for dressing burns, surface wounds, cuts, scrapes, rashes or other dermal wound or lesion comprises a flexible sheet-like dressing made of polyalkyloxazoline. The dressing can have a structural layer and a pressure sensitive adhesive layer. The structural layer can be made of a polyalkyloxazoline composition formulated to obtain a flexible structural sheet. The pressure sensitive adhesive layer can be formulated to obtain pressure sensitive properties, maintaining the treatment film in position during its use. At such time the treatment film is to be removed, it can be removed without harsh scrubbing methods with a warm aqueous spray or soak. The sheet-like treatment means can be reinforced or impregnated with medicinal compositions to induce healing, reduce infection or stabilize the skin surface. US 5654154 relates to Chemiluminescent bioassays for the presence or concentration of an analyte in a sample use 1,2-dioxetanes as substrates for the enzyme of an enzyme complex that bind to the analyte. The chemiluminescence obtained from the decomposition of the dioxetane triggered by the enzyme through the formation of the corresponding 1,2-dioxetane oxyanion of the enzyme complex is enhanced by the addition of TBQ as an enhancement agent. Other polymeric quaternary ammonium salts can be used as enhancement agents in conjunction with enhancement additives which improve the ability of the enhancement agent to form hydrophobic regions in the aqueous sample, in which regions the 1,2-dioxetane oxyanion and its chemiluminescent decomposition products can be sequestered. A kit for performing such assays is also provided. US 5932253 relates to compositions and processes which incorporate water-soluble polymers, other than enzymes, containing =N-C(=O)- (including PVP) and/or N-oxide groups into the wash, rinse, and/or drying cycle of a laundering process (e.g., via fabric softening compositions) for dye transfer inhibition in the subsequent wash cycle. Multiple wash cycles optimize the dye transfer inhibitor performance of these polymers, remove unwanted dye discoloration caused by dye transfer, and provide soil antiredeposition benefits. CN 102965214 relates to a cleaning composition which can endow the surface of a substrate with hydrophilicity. The composition includes: 0.0001-5wt% of at least one water-soluble high molecular compound selected from the group composed of polyvinyl alcohol, polyethylene glycol (PEG), cellulose, polyacrylic acid (PAA), polyethyloxazoline and polyvinylpyrrolidone; 0.01-5wt% of a polyol compound; 0.05-10wt% of quaternary ammonium hydroxide; 0.05-40wt% of a glycol ether-based solvent expressed by the following molecular formula; and the balance water. JP H07 76113 relates to a glass flake exhibiting an excellent effect as the reinforcing material for a thermoplastic resin, etc., by surface-treating the glass flake with the processing agent containing an adhesive and a coupling agent. The processing agent containing an adhesive (polyvinyl acetate, etc.) and a coupling agent (gamma-aminopropyltrimethoxysilane, etc.) is diluted with water, etc., and the solution is coated on the surface of a glass flake and dried. At this time, the mixing weight ratio of the adhesive to the coupling agent is preferably controlled to 1/1-50/1, and 0.1-3.0pts.wt. adhesive and 0.05- 1.0 pts.wt. coupling agent are preferably added to 100pts.wt. glass flake. In addition, the glass flake having 0.5-7.0µm mean thickness, 5-1,000µm mean particle diameter, and 2-1,000 aspect ratio is appropriately used. US 6194075 relates to a water insoluble absorbent coating material comprising a water-insoluble network prepared by combining at least one silicon-containing monomer, at least one water- and solvent-soluble polymer, and, optionally, at least one acidic catalytic component, is provided. A water-insoluble absorbent coating material suitable for use as an ink receptive coating layer in an ink jet film is also provided as are ink jet recording media containing such ink receptive coating layers. US 2012/045583 relates to a process for printing a high resolution pattern on a photopolymeric surface. Waschinski et. al, "Poly(oxazonlines)s with Telechelic Antimicrobial Functions", Biomacromolecules 2005, 6, 235-243 relates to poly(2-alkyl-1,3-oxazoline)s with terminal quaternary ammonium groups. Using a bifunctional iniiao, poly(oxazoline) with a primary amino group at the starting end and an antimicrobial function at the terminal end could be synthesized. Comparing the bioactivity of polymers with different functions at the starting end and terminated with dimethyldodecylamine revealed that that starting group has an effect on the antibacterial properties of the distant terminal. US 2012/183606 relates to drug delivery systems comprising a water-soluble polymer matrix and a bioactive agent entrained therein, said water soluble polymer matrix containing at least 50 wt. % of polyoxazoline having a molar mass of at least 40,000 g/mol. The drug delivery systems of the present invention offer the advantage that the bioactive agent is readily released when the drug delivery system is contacted with water. The drug delivery system can be in the form of a solid dispersion, a mucoadhesive sheet, a tablet, a powder, a capsule.

In summary, there remains a need for a formulation able to confer a residual biocidal activity to treated surfaces. It would be further advantageous if the formulation were combined with a surface disinfectant, to enable a single cleaning to both disinfect and impart the residual biocidal effect.

It further would be advantageous for the residual biocidal property to be durably associated with the treated surface, such that it may continue to provide microbial reduction for an extended period of time after application.

It further would be advantageous if there is a formulation(s) effective across a wide range of industries and applications.

### SUMMARY OF THE INVENTION

The present invention relates to a disinfectant formulation imparting a residual biocidal property. The disinfectant formulation is a liquid disinfectant formulation for healthcare applications comprising 0.5 to 5% of a polymer binder, wherein the polymer binder is an oxazoline homopolymer, and 0.1% to 3% of a biocidal compound. The disinfectant formulation further comprises a carrier.

In the present invention the oxazoline homopolymer has a structure of: 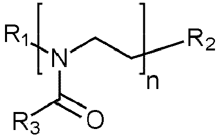 wherein R₁ is a hydrogen, alkyl, alkenyl, alkoxy, alkylamino, alkynyl, allyl, amino, anilino, aryl, benzyl, carboxyl, carboxyalkyl, carboxyalkenyl, cyano, glycosyl, halo, hydroxyl, oxazolinium mesylate, oxazolinium tosylate, oxazolinium triflate, silyl oxazolinium, phenolic, polyalkoxy, quaternary ammonium, thiol, or thioether group; R₂ is a hydrogen, alkyl, alkenyl, alkoxy, alkylamino, alkynyl, allyl, amino, anilino, aryl, benzyl, carboxyl, carboxyalkyl, carboxyalkenyl, cyano, glycosyl, halo, hydroxyl, oxazolinium mesylate, oxazolinium tosylate, oxazolinium triflate, silyl oxazolinium, phenolic, polyalkoxy, quaternary ammonium, thiol, or thioether group or a macrocyclic structure; R₃ is ethyl; and n is in a range of 1 to 1,000,000. The oxazoline homopolymer is based on ethyl oxazoline.

The biocidal compound is a quaternary ammonium compound selected from: n-alkyl dimethyl benzyl ammonium chloride, di-n-octyl dimethyl ammonium chloride, dodecyl dimethyl ammonium chloride, n-alkyl dimethyl benzyl ammonium saccharinate, 3-(trimethoxysilyl) propyldimethyloctadecyl ammonium chloride, and a combination thereof.

In another aspect of the invention other features of the disinfectant formulation(s) are provided.

In yet another aspect of the invention, an article having the disinfectant formulation(s) of the present invention is provided as well as methods of making, using and applying the disinfectant formulation(s).

Further areas of applicability of the present invention will become apparent from the detailed description provided hereinafter.

### DESCRIPTION OF THE PREFERRED EMBODIMENTS

The present invention has broad potential application and utility, which is contemplated to be adaptable across a wide range of industries. The following description is provided herein solely by way of example for purposes of providing an enabling disclosure of the invention, but does not limit the scope or substance of the invention.

As used herein, the terms "microbe" or "microbial" should be interpreted to refer to any of the microscopic organisms studied by microbiologists or found in the use environment of a treated article. Such organisms include, but are not limited to, bacteria and fungi as well as other single-celled organisms such as mold, mildew and algae. Viral particles and other infectious agents are also included in the term microbe.

"Antimicrobial" further should be understood to encompass both microbicidal and microbistatic properties. That is, the term comprehends microbe killing, leading to a reduction in number of microbes, as well as a retarding effect of microbial growth, wherein numbers may remain more or less constant (but nonetheless allowing for slight increase/decrease).

For ease of discussion, this description uses the term antimicrobial to denote a broad spectrum activity (e.g. against bacteria and fungi). When speaking of efficacy against a particular microorganism or taxonomic rank, the more focused term will be used (e.g. antifungal to denote efficacy against fungal growth in particular).

Using the above example, it should be understood that efficacy against fungi does not in any way preclude the possibility that the same antimicrobial composition may demonstrate efficacy against another class of microbes.

For example, discussion of the strong bacterial efficacy demonstrated by a disclosed embodiment should not be read to exclude that embodiment from also demonstrating antifungal activity. This method of presentation should not be interpreted as limiting the scope of the invention in any way.

### Disinfectant Formulation

The present invention is directed to a disinfectant formulation. In an aspect of the invention, the disinfectant formulation is in a liquid form. The composition of the disinfectant formulation comprises a biocidal compound and a polymer binder. The composition may further comprise a solvent (such as water or a low molecular weight alcohol), a surfactant, a colorant, a fragrance, among other components.

A liquid composition is formulated having surface disinfection and residual biocidal properties. The formulation can be applied to a surface by spraying, rolling, fogging, wiping or other means. The formulation acts as a surface disinfectant, killing infectious microbes present on the surface.

Once dried, the liquid formulation leaves a residual protective film on the surface. The residual film possesses a biocidal property, enabling it to maintain protection of the surface against microbial contamination for an extended time period after its application.

In a preferred embodiment, the surface disinfectant formulation imparts a film with the capacity to quickly kill bacteria and other germs for at least 24 hours after deposit of the film on the treated surface. In an aspect of the invention, quick kill generally refers to a time period of about 30 seconds to about 5 minutes. The film will remain on the surface and is durable to multiple touches and wearing of the surface.

The liquid composition comprises a polymer binder, a biocidal compound, a carrier such as a solvent, and other optional components such as fragrances.

### Polymer Binder

The polymer binder of the invention is the oxazoline homopolymer with the following structure: 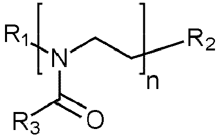 wherein
R₁ and R₂ are end groups determined by the polymerization techniques used to synthesize oxazoline homopolymer. R₁ and R₂ are independently selected and include, but are not limited to, hydrogen, alkyl, alkenyl, alkoxy, alkylamino, alkynyl, allyl, amino, anilino, aryl, benzyl, carboxyl, carboxyalkyl, carboxyalkenyl, cyano, glycosyl, halo, hydroxyl, oxazolinium mesylate, oxazolinium tosylate, oxazolinium triflate, silyl oxazolinium, phenolic, polyalkoxy, quaternary ammonium, thiol, or thioether groups. Alternatively, R₂ could include a macrocyclic structure formed during synthesis as a consequence of intramolecular attack.

For example, R₁ is a methyl group and R₂ is oxazolinium tosylate if methyl tosylate is used as the initiator in the cationic initiated polymerization of oxazoline.

R₃ is an end group determined by the type of oxazoline used in the preparation of the polymer binder of this invention. R₃ includes, but is not limited to, hydrogen, alkyl, alkenyl, alkoxy, aryl, benzyl, hydroxyalkyl, or perfluoroalkyl. For example, R₃ is an ethyl group if ethyloxazoline is the monomer used to prepare the polymer binder for the present invention.
n is the degree of oxazoline polymerization in the homopolymer. n is in a range of 1 to 1,000,000. Preferably, n is in a range of 500 to 250,000; most preferably, n is in a range of 2500 to 100,000.

Examples of commercially available polyethyloxazolines include, but are not limited to, Aquazol 500 from Polymer Chemistry Innovations, Inc.

The amount of polymer binder that can be used in the liquid formulation can vary somewhat depending upon desired length of residual activity of the composition and the nature of all the other components in the composition. In a liquid formulation for healthcare applications, the amount of polymer binder in the liquid formulation is in a range of 0.5 to 5 %. , and most preferably in a range of 0.8% to 5%.

The polymer binder preferably is water-soluble and can be readily removed from surface if any buildup is noticed. Present in small amounts, it nonetheless can provide a durable bond between biocidal compound and the treated surface to facilitate residual efficacy.

### Biocidal Compound

A quaternary ammonium compound (QAC) has the following molecular structure: 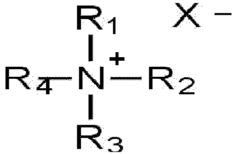 wherein
R₁, R₂, R₃, and R₄ are independently selected and include, but are not limited to, alkyl, alkoxy, or aryl, either with or without heteroatoms, or saturated or non-saturated. Some or all of the functional groups may be the same.

The corresponding anion X⁻ includes, but is not limited to, a halogen, sulfonate, sulfate, phosphonate, phosphate, carbonate/bicarbonate, hydroxy, or carboxylate.

QACs for the present invention are n-alkyl dimethyl benzyl ammonium chloride, din-octyl dimethyl ammonium chloride, and/or n-alkyl dimethyl benzyl ammonium saccharinate.

Other QACs may be used but are not part of the invention.

Combinations of monomeric QACs are preferred to be used. A specific example of QAC combination is N-alkyl dimethyl benzyl ammonium chloride (40%); N-octyl decyl dimethyl ammonium chloride (30%); di-n-decyl dimethyl ammonium chloride (15%); and di-n-dioctyl dimethyl ammonium chloride (15%). The percentage is the weight percentage of individual QAC based on the total weight of blended QACs composition.

Polymeric version of the QACs with the following structures can also be used for
but are not part of the invention: 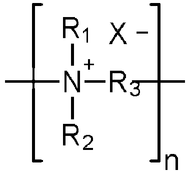 or 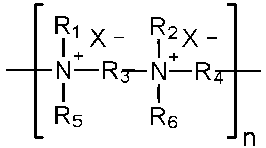 wherein
R₁, R₂, R₅, and R₆, independently, include, but are not limited to, hydrogen, methyl, ethyl, propyl or other longer carbon alkyl groups.
R₃ and R₄ are independently selected and include, but are not limited to, methylene, ethylene, propylene or other longer alkylene linking groups.
n is the degree of polymerization; n is an integer in a range of from 2 to 10,000.

Examples of cationic polymers with the above structure, include but are not limited to, polyamines derived from dimethylamine and epichlorohydrin such as Superfloc C-572 commercially available from Kemira Chemicals.

Still another polymeric QAC which may be used but is not part of the invention is poly diallyldimethylammonium chloride or polyDADMAC.

Yet another class of QACs which may be used but are not part of the present invention are those chemical compounds with biguanide moiety in the molecule. Examples of this class of cationic antimicrobials include, but are not limited to, PHMB and chlorhexidine.

Examples of commercially available quaternary ammonium compounds include, but are not limited to, Bardac 205M and 208M from Lonza, and BTC885 from Stepan Company.

Other compounds which may be used but are not part of the invention are silane quaternary salts such as 3(trihydroxysilyl)propyldimethyloctadecyl ammonium chloride. These may have the added benefit of reacting to the surface being treated for an enhancement of the residual properties.

The concentration of biocidal compound in the liquid formulation for a healthcare is in a range of 0.1 to 3 %, and more preferably in a range of 0.5% to 3%.

### Carrier

The carrier or media for the liquid formulation of this invention can be any solvent that is volatile and allow easy evaporation at ambient condition. Examples of liquid carriers include, but are not limited to, water and low molecular weight alcohols such as C1 to C8 alkanols. Specific examples include, but are not limited to, ethanol, isopropyl alcohol, butanol, pentanol, and combinations thereof.

Another class of solvents for use in the invention includes alkylene glycol ether. Examples include, but are not limited to, ethylene glycol monopropyl ether, ethylene glycol monobutyl ether, ethylene glycol monohexyl ether, ethylene clycol monohexyl ether, diethylene glycol monomethyl ether, diethylene glycol monoethyl ether, diethylene glycol monobutyl ether, diethylene glycol monohexyl ether, triethylene glycol monomethyl ether, triethylene glycol monoethyl ether, triethylene glycol monobutyl ether, propylene glycol methyl ether, propylene glycol methyl ether acetate, propylene glycol n-butyl ether, dipropylene glycol n-butyl ether, dipropylene glycol methyl ether, dipropylene glycol methyl ether acetate, propylene glycol n-propyl ether, dipropylene glycol n-propyl ether, and tripropylene glycol methyl ether.

Another class of solvents for use in the invention is based on terpenes and their derivatives such as terpene alcohols, terpene esters, terpene ethers, or terpene aldehydes. Examples of solvents, include but are not limited to, pine oil, lemon oil, limonene, pinene, cymene, myrcene, fenchone, borneol, nopol, cineole, ionone and the like.

A preferred carrier in a liquid formulation for a home care cleaning application is water.

If the method of the application of the liquid formulation of the present invention is pressurized aerosol, a propellant may be needed in the composition. A variety of propellants or mixtures can be used for the present invention and should be familiar to those skilled in the art. C1 to C10 hydrocarbons or halogenated hydrocarbons are typical propellants in aerosol compositions known to the industry. Examples of such propellants include, but are not limited to, pentane, butane, propane, and methane. Other types of propellants that can be used for the present invention also include compressed air, nitrogen, or carbon dioxide. Alternatively, a bag on valve package may be used to aerosol the product without directly add a propellant to the composition.

Either a single solvent or a mixture of the above solvents can be used for the present invention. The types of solvents used for the present invention may depend upon the intended uses of the residual disinfectant composition. For example, if the composition of the present invent is intended for home care use, cleaning the contaminated surfaces free of all types of dirt or soil may be of primary interest. Liquid carrier or media that assist and enhance the removal of soil may be formulation of the invention. For example, the residual disinfectant formulation or composition of the present invention may desire to include alkyl or multi-alkyl glycol ethers for better cleaning performance in the home care version of the formulation of the present invention. On the other hand, if the primary goal of the residual disinfectant composition is to be used at a health care facility where the major concern is hospital acquired infection, then quick drying of the liquid composition of the present invention may be more desirable than cleaning dirt or soil out of the surfaces. Low molecular weight alcohols should be considered to help the liquid formulation of the present invent dry fast after the application. Also, a low molecular weight alcohol in the liquid formulation will strengthen the sanitizing activity of the liquid composition.

For health care use of the residual disinfectant, a mixture of water and low molecular weight alcohol is preferred. The amount of alcohol present in the liquid formulation is preferred to be at such a level that the liquid formulation is capable of forming a zerotropic mixture between the alcohol and water. A minimum amount of alcohol, if present, in the liquid composition is 10%. Preferably, for health care use of the residual disinfectant, the alcohol concentration is 30%, and most preferably the alcohol concentration is at least 50% based on the weight of liquid formulation for the health care use of the composition of the invention.

### Surfactant

A surfactant or wetting agent may be employed. The surfactant assists the liquid formulation to spread and evenly coat the surface being treated. The surfactant additionally contributes to the formation of a zeotropic mixture between alcohol and water, thus facilitating a rapid and uniform drying of the liquid formulation once being applied onto surface. A surfactant also plays an important role in the residual disinfectant liquid formulation of the present invention for home care use if the soil cleaning performance is the key feature the product is designed to possess.

Surfactants appropriate for the present liquid formulation include, but are not limited to, those that are nonionic, anionic, or amphoteric in nature. Examples of commercially available wetting agents include, but are not limited to, Ecosurf SA-4 or Tergitol TMN-3 from Dow Chemical, and Q2-5211 from Dow Corning.

An amine oxide surfactant is preferred especially when the QAC is used as the biocidal compound in the formulation.

In the category of nonionic surfactants, ethoxylated alcohols with different amounts of ethylene oxides or HLB values can be used. Examples of ethoxylated alcohols include, but are not limited to, Triton X-100 (Dow Chemical, Midland MI), Ecosurf EH nonionic surfactant series from Dow Chemical, Tergitol nonionic surfactant series from Dow Chemical, the Surfonic surfactant series from Huntsman Corp., the Neodol surfactant series from Shell, the Ethox surfactant series from Ethox Chemicals and the Tomadol surfactant series from Air Products and Chemicals, Inc.

Another class of nonionic surfactants include alkylpolyglucosides. Examples include the Glucopon Series from BASF and the Ecoteric series from Huntsman.

An alternative class of surfactants that is preferred for the liquid formulation are silane-based surfactants. Examples include but, are not limited to, silicone polyethers organofunctional or reactive silane wetting agents, and fluorochemical based wetting agents.

The content of the surfactant in the liquid formulation is in a range of 0% to 10%, preferably in a range of 0.01% to 5%.

Depending on the targeted uses, a liquid formulation of the present invention for home care use may need appropriate pH condition. For example, if the liquid product is used in the kitchen area, a high pH product may be desired in order to effectively remove grease soils commonly found in the area. If the product is used in bathroom area, soap scum and hard water deposits may be the primary concern. In such case, a low pH product may be more appropriate for such a purpose. There is no limitation on the types of pH adjusting agents that can be added into the liquid composition of the present invention. Example of pH adjusting agents that can be used include, but are not limited to, triethanolamine, diethanolamine, monoethanolamine, sodium hydroxide, sodium carbonate, potassium hydroxide, potassium carbonate, calcium carbonate, citric acid, acetic acid, hydrochloric acid, sulfamic acid, sulfuric acid and the like.

Other than components mentioned above, additional functional components may be included in the liquid composition of the present invention. Additional components include, but are not limited to, chelants, compatibilizers, coupling agents, corrosion inhibitors, rheology modifiers, fragrances, colorants, preservatives, UV stabilizers, optical brighteners, and active ingredient indicators.

In an embodiment of the present invention, the liquid solution comprises a polymer binder, a quaternary ammonium compound, a silicone-based surfactant, and ethanol. The liquid formulation can be made or mixed by any conventional method known to one of ordinary skill in the art. There are no preferred addition procedures for the formulation of the present invention provided that the formulation is ultimately homogeneous, compatible and stable. For example, if the polymer binder is a solid, it may be preferable to first dissolve or disperse the polymer in a carrier such as water or alcohol to make a stock polymer binder liquid dispersion. The stock polymer binder liquid dispersion may be readily added into the formulation of the present invention during the mixing procedure.

### Application of Liquid Formulation

The liquid formulation may be applied by a variety of means. If sprayed, the liquid formulation advantageously may be supplied in a conventional bottle with a sprayer. The sprayer can be a trigger sprayer. As an option to a trigger sprayer, an aerosol can also be used to deliver the liquid formulation on to surfaces. Additional application means include, but are not limited to, fogging, rolling, brushing, mopping, and using a wipe by a variety of application devices. It is within the scope of the present invention that wipe products can also be made comprising or pre-treated with the disinfectant formulation(s) of the present invention, for example, for off-the-shelf sale or use.

To disinfect a contaminated surface, spray the liquid formulation until the area is completely covered. The wet formulation subsequently may be wiped dry with a dry cloth or paper towel.

The invention also relates to an article treated with a disinfectant formulation in accordance with aspects of the invention.

### Examples

The following examples illustrate liquid formulations made in accordance with aspects of the present invention. The testing results on these formulations demonstrate the desired residual sanitizing or disinfecting performance once being applied onto surfaces and dried. Cleaning performance is also tested on those formulations that not only provide residual disinfecting benefit but also cleaning features.

Formulations were tested for residual efficacy using the EPA 01-1A protocol. Briefly, bacteria were added to a glass slide and allowed to dry on the surface. The formulation was then sprayed onto the surface and dried to form a transparent film. Once a film had formed, the glass slide was exposed to alternating wet and dry cycles using the Gardner wear tester as described in the protocol. In between each cycle the slide was re-inoculated with bacteria. After the appropriate number of wear and re-inoculations (48 passes and 11 re-inoculations for healthcare formulation and 24 passes 5 re-inoculation for homecare formulation) the slide was exposed to bacteria for the indicated time frame (i.e. 5 minutes) followed by recovery in an appropriate neutralizing solution.

In addition to residual efficacy, initial efficacy of the composition of the present invention was also tested according to ASTM E 1153.

A modified ASTM D4488 was used to evaluate the hard surface cleaning performance for the home care composition of the present invention. A soil of the following composition was used for the evaluation.

**Table 1**

| **Components** | **Weight percentage of each component (%)** |
|---|---|
| Pure vegetable oil | 75 |
| TM-122 AATCC carpet soil | 25 |

| | |
|---|---|
| *TM-122 AATCC carpet soil was obtained from Textile Innovators | |

In the process of making a soiled ceramic tile for the cleaning test, around 2 grams of the liquid soil was placed on an aluminum foil. A roller was used to roll and spread out the soil on the foil and let the roller pick up the soil as much as possible. The soil on the roller was transferred to the glazed surface of a ceramic tile evenly by rolling the soiled roll on the ceramic surface. The soiled ceramic tile was then baked in oven set at 180C for 45 minutes. The baked tile was conditioned at room temperature for 24 hours before being used for the cleaning test.

A Gardner wear tester was used in the cleaning test. Scouring pads of around 1 cm width were attached to the abrasion boat for the wearing. Around 4 grams of test formulation was placed in a weighing boat. The attached scouring pad was dipped into the weighing boat to pick up the testing formulation.

The cleaning process started immediately after the pad is wetted with the cleaning formulation. Seven wearing cycles (back and forth) were used in the test.

### Residual disinfectant examples for healthcare

The following formulation in the example uses alcohol as the major carrier in order to provide fast drying property to the liquid formulations.

**Table 2**

| Components | HE1 (wt %) | HE2 (wt %) | HE3 (wt%) |
|---|---|---|---|
| Water | balance | balance | balance |
| Ethanol | 70 | 70 | 0 |
| 2-Propanol | 0 | 0 | 70 |
| Polyethyloxazoline | 2 | 2 | 2 |
| Quaternary ammonium compound | 0.8 | 1.2 | 1.2 |
| Wetting agent/Surfactant | 0.1 | 0.1 | 0.1 |

The residual efficacy testing was conducted using EP01-1A protocol and the results are listed in the following Table.

**Table 3**

| **Formulation** | **EP01-1A (average log reduction bacterial)** |
|---|---|
| HE1 | 3.53 |
| HE2 | 5.50 |
| HE3 | 4.50 |

These formulations show excellent residual efficacy result based on EP01-1A test.

The ASTM E 1153 test protocol was also followed to assess the initial biocidal property of HE2. Test results are presented in the following table.

**Table 4**

| **Initial Efficacy** | **Time** | **Method** | |
|---|---|---|---|
| **Bacterial** | **3 log reduction** | **Complete kill (<10 CFU/PFU)** | |
| *Klebsiella pneumoniae* | 30 seconds | 1 minute | ASTM E 1153 |
| *Pseudomonas aerugniosa* | 30 seconds | 30 seconds | ASTM E 1153 |
| *Staphylococcus aureus* | 30 seconds | 30 seconds | ASTM E 1153 |
| *MRSA* | 30 seconds | 30 seconds | ASTM E 1153 |
| *VRE* | 30 seconds | 30 seconds | ASTM E 1153 |
| *Enterobacter aerogenes* | 30 seconds | 30 seconds | ASTM E 1153 |
| *Enterococcus faecalis* | 30 seconds | 1 minute | ASTM E 1153 |

| **Fungal** | | | |
|---|---|---|---|
| *Aspergillus niger* | 1 minute | 5 minutes | ASTM E 1153 |
| *Tricophyton mentagrophytes* | 1 minute | 5 minutes | ASTM E 1153 |

| **Viral** | | | |
|---|---|---|---|
| H1N1 (envelope) | 30 seconds | 30 seconds | ASTM E 1053 |
| MS2 (Non-enveloped) | 30 seconds | 5 minutes | ASTM E 1053 |
| | | | |

| **Residual Efficacy** | **Time frame of exposure** | **Log reduction** | **Method** |
|---|---|---|---|
| *Pseudomonas aerugniosa* | 5 minutes | >3 | EPA 01-1A |
| *Enterobacter aerogenes* | 5 minutes | >3 | EPA 01-1A |
| *Staphylococcus aureus* | 5 minutes | >3 | EPA 01-1A |

These data clearly demonstrate that sample surfaces treated with the exemplary liquid formulation disclosed herein possess a demonstrable biocidal activity at the indicated time frame.

### Residual disinfectant cleaner examples for homecare

These compositions are formulated using water as the carrier. They are intended for homecare use where VOC regulations prohibit most use of high levels of organic solvents such as alcohols.

**Table 5**

| **Components** | **H1 (wt%)** | **H2 (wt%)** | **H3 (wt%)** | **H4 (wt%)** | **H5 (wt%)** |
|---|---|---|---|---|---|
| Water | balance | balance | balance | balance | balance |
| EDTA tetra sodium | 0 | 0 | 0 | 0 | 0.4 |
| Polyethyloxazoline | 1 | 1 | 1 | 0.5 | 0.5 |
| Ethoxylated alcohol #1 | 0.33 | 0 | 0 | 0 | 0 |
| Ethoxylated alcohol #2 | 0 | 0 | 0.2 | 0.2 | 0.2 |
| Quaternary ammonium compound | 0.4 | 0.4 | 0.4 | 0.4 | 0.4 |
| Ethanolamine | 0.2 | 0.2 | 0.2 | 0.2 | 0.2 |
| Wetting Agent | 0.1 | 0.1 | 0.1 | 0.1 | 0.1 |

The residual efficacy of these formulations were assessed using EP01-1A protocol and the results are listed in the following Table.

**Table 6**

| **Formulation** | **EP01-1A (average log reduction bacterial)** |
|---|---|
| **H1** | 3.53 |
| **H2** | 5.50 |
| **H3** | 5.50 |
| **H4** | 4.90 |
| **H5** | 3.80 |

Enterobacter aerogenes was the bacterial for H1 testing and Staphylococcus aureus was the bacteria used in the testing for the rest of the formulations.

The testing results demonstrate that the H1 to H5 all provide residual efficacy to the treated surfaces. The cleaning performance was also evaluated using the modified ASTM D4488 test method.

The testing results also clearly visually showed the formulation of present invention not only provided residual efficacy against bacterial but also good cleaning performance on soiled surfaces.

Additional formulations set forth in the Tables below were tested for home care and home cleaning applications. To solubilize the fragrance, a pre-mix is prepared containing the fragrance, quaternary ammonium compound, surfactant and glycol ether if present.

**Table 7 - Light Duty Protectant Formulations**

| **Component** | **P1 (wt %)** | **P2 (wt %)** | **P3 (wt %)** | **P4 (wt %)** | **P5 (wt %)** | **P6 (wt %)** | **P7 (wt %)** | **P8 (wt %)** | **P9 (wt %)** | **P10 (wt %)** | **P11 (wt %)** | **P12 (wt %)** | **P13 (wt %)** | **P14 (wt %)** | **P15 (wt %)** |
|---|---|---|---|---|---|---|---|---|---|---|---|---|---|---|---|
| Polyethyloxazoline | 1.00 | 1.00 | 1.00 | 1.00 | 1.00 | 1.00 | 1.00 | 1.00 | 1.00 | 1.00 | 0.50 | 1.00 | 0.50 | 1.00 | 0.50 |
| Quaternary ammonium compound | 0.40 | 0.40 | 0.40 | 0.40 | 0.40 | 0.40 | 0.40 | 0.40 | 0.40 | 0.40 | 0.40 | 0.20 | 0.20 | 0.10 | 0.10 |
| Fragrance | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| Wetting agent | 0.30 | | | | | | | | | 0.10 | 0.10 | 0.10 | 0.10 | 0.10 | 0.10 |
| Amine Oxide | | 0.30 | | | | 0.30 | 0.30 | 0.30 | 0.30 | | | | | | |
| Ethoxylated Cationic surfactant | | | 0.30 | | | | | | | | | | | | |
| Dicoco quat | | | | 0.30 | | | | | | | | | | | |
| Ethoxylated alcohol | | | | | 0.30 | | | | | | | | | | |
| Triethanolamine | | | | | | 0.50 | | | | 0.50 | 0.50 | 0.50 | 0.50 | 0.50 | 0.50 |
| NaEDTA | | | | | | | 0.10 | | | | | | | | |
| Sodium metasilicate pentahydrate | | | | | | | | 0.10 | | | | | | | |
| Sodium Carbonate | | | | | | | | | 0.10 | | | | | | |
| Water* | B | B | B | B | B | B | B | B | B | B | B | B | B | B | B |

| **Component** | **P16 (wt %)** | **P17 (wt %)** | **P18 (wt %)** | **P19 (wt %)** | **P20 (wt %)** | **P21 (wt %)** | **P22 (wt %)** | **P23 (wt %)** | **P24 (wt %)** | **P25 (wt %)** | **P26 (wt %)** | **P27 (wt %)** | **P28 (wt %)** | **P29 (wt %)** |
|---|---|---|---|---|---|---|---|---|---|---|---|---|---|---|
| Polyethyloxazoline | 1.00 | 0.50 | 1.00 | 0.50 | 1.00 | 0.50 | 1.00 | 0.50 | 1.00 | 1.00 | 1.00 | 0.50 | 0.50 | 0.50 |
| Quaternary ammonium compound | 0.20 | 0.20 | 0.10 | 0.10 | 0.20 | 0.20 | 0.10 | 0.10 | 0.20 | 0.20 | 0.20 | 0.20 | 0.20 | 0.20 |
| Fragrance | 0.05 | 0.05 | 0.05 | 0.05 | 0.05 | 0.05 | 0.05 | 0.05 | 0.05 | 0.05 | 0.05 | 0.05 | 0.05 | 0.05 |
| Wetting agent | | | | | | | | | | | | | | |
| Amine Oxide | 0.30 | 0.30 | 0.30 | 0.30 | | | | | | | | | | |
| Ethoxylated Cationic surfactant | | | | | | | | | | | | | | |
| Dicoco quat | | | | | | | | | | | | | | |
| Ethoxylated alcohol | | | | | 0.20 | 0.20 | 0.20 | 0.20 | 0.20 | 0.20 | 0.20 | 0.20 | 0.20 | 0.20 |
| Triethanolamine | 0.50 | 0.50 | 0.50 | 0.50 | 0.50 | 0.50 | 0.50 | 0.50 | | | | | | |
| NaEDTA | | | | | | | | | 0.10 | | | 0.10 | | |
| Sodium metasilicate pentahydrate | | | | | | | | | | 0.10 | | | 0.10 | |
| Sodium Carbonate | | | | | | | | | | | 0.10 | | | 0.10 |
| Water* | B | B | B | B | B | B | B | B | B | B | B | B | B | B |

| | | | | | | | | | | | | | | |
|---|---|---|---|---|---|---|---|---|---|---|---|---|---|---|
| *B means balance water | | | | | | | | | | | | | | |

**Table 8 - All Purpose Cleaner Formulations**

| **Component** | **A1 (wt %)** | **A2 (wt %)** | **A3 (wt %)** | **A4 (wt %)** | **A5 (wt %)** | **A6 (wt %)** | **A7 (wt %)** | **A8 (wt %)** | **A9 (wt %)** | **A10 (wt %)** | **A11 (wt %)** | **A12 (wt %)** | **A13 (wt %)** | **A14 (wt %)** | **A15 (wt %)** |
|---|---|---|---|---|---|---|---|---|---|---|---|---|---|---|---|
| Polyethyloxazoline | 1.00 | 1.00 | 1.00 | 1.00 | 1.00 | 1.00 | 1.00 | 1.00 | 1.00 | 1.00 | 1.00 | 1.20 | 1.00 | 1.20 | 1.00 |
| Quaternary ammonium compound | 0.40 | 0.40 | 0.40 | 0.40 | 0.40 | 0.40 | 0.40 | 0.40 | 0.40 | 0.40 | 0.50 | 0.50 | 0.40 | 0.80 | 0.40 |
| Fragrance | 0.10 | 0.10 | 0.10 | 0.10 | 0.10 | 0.10 | 0.10 | 0.10 | 0.10 | 0.10 | 0.10 | 0.10 | 0.10 | 0.10 | 0.10 |
| Amine Oxide | | 0.90 | 0.90 | 0.90 | 0.90 | 0.90 | 0.90 | 0.90 | 0.60 | 0.45 | 0.45 | 0.60 | 0.60 | 0.60 | 0.45 |
| Ethoxylated Alcohol 1 | 0.50 | | | | | | | | | | | | | | |
| Ethoxylated Alcohol 2 | | | | | | | | | | | | | | | |
| Alkyl-polyalucoside | | | | | | | | | | | | | | | |
| Triethanolamine | | | | | | | | 1.0 | | | | | | | |
| Glycol Ether 1 | | | | | | | | | | | | | | | 5.00 |
| Glycol Ether 2 | | | | | | | | | | | | | | | |
| NaEDTA | | | 0.40 | | | | | | | | | | | | |
| Sodium metasilicate pentahydrate | | | | 0.10 | | | | | 0.25 | 0.25 | 0.25 | 0.10 | 0.10 | 0.10 | 0.10 |
| Sodium Carbonate | | | | | 0.10 | | | | | | | | | | |
| STPP | | | | | | 0.10 | | | | | | | | | |
| TKPP | | | | | | | 0.10 | | | | | | | | |
| Water* | B | B | B | B | B | B | B | B | B | B | B | B | B | B | B |

| **Component** | **A16 (wt %)** | **A17 (wt %)** | **A18 (wt %)** | **A19 (wt %)** | **A20 (wt %)** | **A21 (wt %)** | **A22 (wt %)** | **A23 (wt %)** | **A24 (wt %)** | **A25 (wt %)** | **A26 (wt %)** | **A27 (wt %)** | **A28 (wt %)** | **A29 (wt %)** | **A30 (wt %)** |
|---|---|---|---|---|---|---|---|---|---|---|---|---|---|---|---|
| Polyethyloxazoline | 1.0 | 0.80 | 0.80 | 1.0 | 1.00 | 1.20 | 1.00 | 1.00 | 1.00 | 1.00 | 1.00 | 1.00 | 1.00 | 1.00 | 1.00 |
| Quaternary ammonium compound | 0.80 | 0.50 | 0.50 | 0.50 | 0.50 | 0.50 | 0.50 | 0.50 | 0.50 | 0.50 | 0.50 | 0.50 | 0.50 | 0.50 | 0.50 |
| Fragrance | 0.10 | 0.10 | 0.10 | 0.10 | 0.10 | 0.10 | 0.10 | 0.10 | 0.10 | 0.10 | 0.10 | 0.10 | 0.10 | 0.10 | 0.10 |
| Amine Oxide | 0.60 | 0.60 | 0.60 | 1.50 | 1.20 | 0.60 | | | | | | | | | 0.60 |
| Ethoxylated Alcohol 1 | | | | | | | | 0.10 | | 0.20 | | | 0.60 | 0.60 | |
| Ethoxylated Alcohol 2 | | | | | | | | | 0.10 | | 0.20 | 0.20 | | | |
| Alkyl-polyalucoside | | | | | | | 0.60 | 0.50 | 0.50 | 0.40 | 0.40 | 0.40 | | | |
| Triethanolamine | | | | 0.50 | | | | | | | | 0.50 | 0.50 | 0.50 | 0.50 |
| Glycol Ether 1 | | | 5.00 | | | | | | | | | | 2.40 | | |
| Glycol Ether 2 | | | | | | | | | | | | | | 2.40 | 2.40 |
| NaEDTA | | | | | | | | | | | | | | | |
| Sodium metasilicate pentahydrate | 0.10 | 0.10 | | | | | 0.05 | 0.05 | 0.05 | 0.05 | 0.05 | | | | |
| Sodium Carbonate | | | | | | | | | | | | | | | |
| STPP | | | | | | | | | | | | | | | |
| TKPP | | | | | | | | | | | | | | | |
| Water* | B | B | B | B | B | B | B | B | B | B | B | B | B | B | B |

**Table 9 - Bathroom Cleaner Formulations**

| **Component** | **B1 (wt %)** | **B2 (wt %)** | **B3 (wt %)** | **B4 (wt %)** | **B5 (wt %)** | **B6 (wt %)** | **B7 (wt %)** | **B8 (wt %)** | **B9 (wt %)** | **810 (wt %)** | **B11 (wt %)** | **B12 (wt %)** | **B13 (wt %)** | **B14 (wt %)** | **B15 (wt %)** |
|---|---|---|---|---|---|---|---|---|---|---|---|---|---|---|---|
| Polyethyloxazoline | 1.00 | 1.00 | 1.00 | 1.00 | 1.00 | 1.00 | 1.00 | 1.00 | 1.00 | 1.00 | 1.00 | 1.00 | 1.00 | 1.00 | 1.00 |
| Quaternary ammonium compound | 0.20 | 0.20 | 0.20 | 0.20 | 0.20 | 0.20 | 0.20 | 0.20 | 0.20 | 0.20 | 0.20 | 0.20 | 0.20 | 0.20 | 0.20 |
| Fragrance | 0.10 | 0.10 | 0.10 | 0.10 | 0.10 | 0.10 | 0.10 | 0.10 | 0.10 | 0.10 | 0.10 | 0.10 | 0.10 | 0.10 | 0.10 |
| Amine Oxide | 0.84 | | 0.42 | 0.84 | | 0.42 | 0.84 | | 0.42 | 0.84 | | 0.42 | 0.84 | | 0.42 |
| Ethoxylated alcohol 1 | | 0.84 | | | 0.84 | | | 0.84 | | | 0.84 | | | 0.84 | |
| Ethoxylated alcohol 2 | | | 0.50 | | | 0.50 | | | 0.50 | | | 0.50 | | | 0.50 |
| Glycol Ether | | | | 4.00 | 4.00 | 4.00 | | | | 4.00 | 4.00 | 4.00 | 4.00 | 4.00 | 4.00 |
| NaEDTA | 2.90 | 2.90 | 2.90 | 2.90 | 2.90 | 2.90 | | | | | | | | | |
| Citric Acid | | | | | | | 2.50 | 2.50 | 2.50 | 2.50 | 2.50 | 2.50 | | | |
| Sulfamic Acid | | | | | | | | | | | | | 2.50 | 2.50 | 2.50 |
| Water* | B | B | B | B | B | B | B | B | B | B | B | B | B | B | B |

It will therefore be readily understood by those persons skilled in the art that the present composition and methods are susceptible of broad utility and application.

Accordingly, while the present composition and methods have been described herein in detail in relation to its preferred embodiment, it is to be understood that this disclosure is only illustrative and exemplary and is made merely for purposes of providing a full and enabling disclosure.

## Claims

1. A liquid disinfectant formulation for healthcare applications comprising:
0.5 to 5% of a polymer binder, wherein the polymer binder is an oxazoline homopolymer having a structure of: 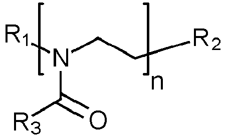 wherein
R₁ is a hydrogen, alkyl, alkenyl, alkoxy, alkylamino, alkynyl, allyl, amino, anilino, aryl, benzyl, carboxyl, carboxyalkyl, carboxyalkenyl, cyano, glycosyl, halo, hydroxyl, oxazolinium mesylate, oxazolinium tosylate, oxazolinium triflate, silyl oxazolinium, phenolic, polyalkoxy, quaternary ammonium, thiol, or thioether group;
R₂ is a hydrogen, alkyl, alkenyl, alkoxy, alkylamino, alkynyl, allyl, amino, anilino, aryl, benzyl, carboxyl, carboxyalkyl, carboxyalkenyl, cyano, glycosyl, halo, hydroxyl, oxazolinium mesylate, oxazolinium tosylate, oxazolinium triflate, silyl oxazolinium, phenolic, polyalkoxy, quaternary ammonium, thiol, or thioether group or a macrocyclic structure;
R₃ is ethyl; and
n is in a range of 1 to 1,000,000
wherein the oxazoline homopolymer is based on ethyl oxazoline;
and
0.1% to 3% of a biocidal compound, wherein the biocidal compound is a quaternary ammonium compound selected from: n-alkyl dimethyl benzyl ammonium chloride, di-n-octyl dimethyl ammonium chloride, n-alkyl dimethyl benzyl ammonium saccharinate, and a combination thereof;
and
a carrier.

2. The disinfectant formulation according to claim 1, wherein the carrier comprises a solvent or a mixture of solvents.

3. The disinfectant formulation according to claim 2, wherein the solvent or mixture of solvents comprise water, a low molecular weight alcohol, alkylene glycol ether, a terpene, terpene alcohol, terpene ester, terpene ether or terpene aldehyde, and a combination thereof.

4. The disinfectant formulation according to claim 1, further comprising a surfactant or a wetting agent.

5. The disinfectant formulation according to claim 4, wherein the surfactant is present in a range of 0.01% to 10%.

6. An article comprising the disinfectant formulation according to claim 1.

7. The article according to claim 6, wherein the article is in a form of a wipe or other disposable product.

8. A method of using a disinfectant formulation according to claim 1, comprising treating a surface with the disinfectant formulation to impart a film having a capacity to kill bacteria and other germs in a time period of from 30 seconds to 5 minutes for at least 24 hours after deposit of the film on the treated surface wherein the surface is not a human or animal body.

9. The method according to claim 8, wherein treating occurs by an application method selected from the group consisting of spraying, fogging, rolling, brushing, mopping, wiping, and a combination thereof.

## Patentansprüche

1. Flüssige Desinfektionsmittelformulierung für Anwendungen im Gesundheitswesen, umfassend:
0,5 bis 5% eines Polymerbindemittels, wobei das Polymerbindemittel ein Oxazolinhomopolymer ist, das eine Struktur: 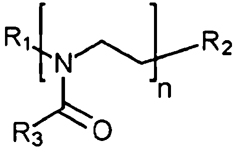
aufweist, wobei
R₁ eine Wasserstoff-, Alkyl-, Alkenyl-, Alkoxy-, Alkylamino-, Alkinyl-, Allyl-, Amino-, Anilino-, Aryl-, Benzyl-, Carboxyl-, Carboxyalkyl-, Carboxyalkenyl-, Cyano-, Glycosyl-, Halogen-, Hydroxyl-, Oxazoliniummesylat-, Oxazoliniumtosylat-, Oxazoliniumtriflat-, Silyloxazolinium-, Phenol-, Polyalkoxy-, quaternäre Ammonium-, Thiol- oder Thioethergruppe ist;
R₂ eine Wasserstoff-, Alkyl-, Alkenyl-, Alkoxy-, Alkylamino-, Alkinyl-, Allyl-, Amino-, Anilino-, Aryl-, Benzyl-, Carboxyl-, Carboxyalkyl-, Carboxyalkenyl-, Cyano-, Glycosyl-, Halogen-, Hydroxyl-, Oxazoliniummesylat-, Oxazoliniumtosylat-, Oxazoliniumtriflat-, Silyloxazolinium-, Phenol-, Polyalkoxy-, quaternäre Ammonium-, Thiol- oder Thioethergruppe oder eine makrocyclische Struktur ist;
R₃ Ethyl ist; und
n im Bereich von 1 bis 1.000.000 liegt,
wobei das Oxazolin-Homopolymer auf Ethyloxazolin;
und
0,1 % bis 3% einer bioziden Verbindung basiert, wobei die biozide Verbindung eine quaternäre Ammoniumverbindung ist, ausgewählt aus: n-Alkyldimethylbenzylammoniumchlorid, Di-n-octyldimethylammoniumchlorid, n-Alkyldimethylbenzylammoniumsaccharinat und einer Kombination davon;
und
einen Träger.

2. Desinfektionsmittelformulierung nach Anspruch 1, wobei der Träger ein Lösungsmittel oder eine Mischung von Lösungsmitteln umfasst.

3. Desinfektionsmittelformulierung nach Anspruch 2, wobei das Lösungsmittel oder die Mischung von Lösungsmitteln Wasser, einen niedermolekularen Alkohol, Alkylenglykolether, ein Terpen, Terpenalkohol, Terpenester, Terpenether oder Terpenaldehyd sowie eine Kombination davon umfasst.

4. Desinfektionsmittelformulierung nach Anspruch 1, ferner umfassend ein Tensid oder ein Netzmittel.

5. Desinfektionsmittelformulierung nach Anspruch 4, wobei das Tensid in einem Bereich von 0,01 % bis 10% vorliegt.

6. Artikel, umfassend die Desinfektionsmittelformulierung nach Anspruch 1.

7. Artikel nach Anspruch 6, wobei der Artikel in Form eines Wischtuchs oder eines anderen Einwegprodukts vorliegt.

8. Verfahren zur Verwendung einer Desinfektionsmittelformulierung nach Anspruch 1, umfassend Behandeln einer Oberfläche mit der Desinfektionsmittelformulierung, um einen Film zu verleihen, der eine Fähigkeit aufweist, Bakterien und andere Keime innerhalb eines Zeitraums von 30 Sekunden bis 5 Minuten für mindestens 24 Stunden nach Ablagerung des Films auf der behandelten Oberfläche abzutöten, wobei die Oberfläche kein humaner oder Tierkörper ist.

9. Verfahren nach Anspruch 8, wobei die Behandlung durch ein Applikationsverfahren erfolgt, das ausgewählt ist aus der Gruppe bestehend aus Sprühen, Einnebeln, Walzen, Bürsten, Wischen, Abwischen und einer Kombination davon.

## Revendications

1. Formulation désinfectante liquide pour applications médicales comprenant :
0,5 à 5 % d'un liant polymère, dans laquelle le liant polymère est un homopolymère d'oxazoline présentant la structure suivante : 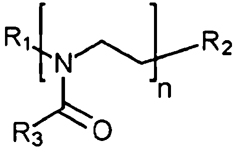
dans laquelle
R₁ est hydrogène, un groupe alkyle, alcényle, alcoxy, alkylamino, alcynyle, allyle, amino, anilino, aryle, benzyle, carboxyle, carboxyalkyle, carboxyalcényle, cyano, glycosyle, halo, hydroxyle, mésylate d'oxazolinium, tosylate d'oxazolinium, triflate d'oxazolinium, silyl-oxazolinium, phénolique, polyalcoxy, ammonium quaternaire, thiol ou thioéther ;
R₂ est hydrogène, un groupe alkyle, alcényle, alcoxy, alkylamino, alcynyle, allyle, amino, anilino, aryle, benzyle, carboxyle, carboxyalkyle, carboxyalcényle, cyano, glycosyle, halo, hydroxyle, mésylate d'oxazolinium, tosylate d'oxazolinium, triflate d'oxazolinium, silyl-oxazolinium, phénolique, polyalcoxy, ammonium quaternaire, thiol ou thioéther ou une structure macrocyclique ;
R₃ est éthyle ; et
n est compris dans une plage de 1 à 1 000 000
dans laquelle l'homopolymère d'oxazoline est à base d'éthyloxazoline ;
et
0,1 % à 3 % d'un composé biocide, dans laquelle le composé biocide est un composé d'ammonium quaternaire sélectionné parmi : le chlorure de n-alkyl-diméthyl-benzyl-ammonium, le chlorure de di-n-octyl-diméthyl-ammonium, le saccharinate de n-alkyl-diméthyl-benzyl-ammonium et une combinaison de ceux-ci ;
et
un support.

2. Formulation désinfectante selon la revendication 1, dans laquelle le support comprend un solvant ou un mélange de solvants.

3. Formulation désinfectante selon la revendication 2, dans laquelle le solvant ou le mélange de solvants comprend de l'eau, un alcool de faible poids moléculaire, un éther d'alkylène glycol, un terpène, un alcool terpénique, un ester terpénique, un éther terpénique ou un aldéhyde terpénique, et une combinaison de ceux-ci.

4. Formulation désinfectante selon la revendication 1, comprenant en outre un tensioactif ou un agent mouillant.

5. Formulation désinfectante selon la revendication 4, dans laquelle le tensioactif est présent dans une plage de 0,01 % à 10 %.

6. Article comprenant la formulation désinfectante selon la revendication 1.

7. Article selon la revendication 6, dans lequel l'article se présente sous forme de lingette ou d'un autre produit jetable.

8. Procédé d'utilisation d'une formulation désinfectante selon la revendication 1, comprenant le traitement d'une surface avec la formulation désinfectante pour y déposer un film présentant la capacité de tuer les bactéries et autres germes en un temps de 30 secondes à 5 minutes pendant au moins 24 heures après le dépôt du film sur la surface traitée, dans lequel la surface n'est pas un corps humain ou animal.

9. Procédé selon la revendication 8, dans lequel le traitement s'effectue par un procédé d'application sélectionné dans le groupe consistant en la pulévrisation, la nébulisation, l'application au rouleau, l'application à la brosse, le passage de serpillière, l'essuyage et une combinaison de ceux-ci.
